# EUROPÄISCHE PATENTSCHRIFT

(11) **EP 2 364 876 B1**
(45) Veröffentlichungstag und Bekanntmachung des Hinweises auf die Patenterteilung: **10.02.2016**
(21) Anmeldenummer: 10009669.2
(22) Anmeldetag: 16.09.2010
(51) Int. Cl.: B60N 2/68, B60R 21/02, B60R 21/13, B60N 2/427, B60N 2/42, B66C 19/00, B60R 22/24

(54) **Fahrerrückhaltesystem für den Bediener eines Portalstaplers**
Driver restraint system for the operator of a straddle carrier
Système de retenue de conducteur pour l'utilisateur d'une empileuse de portails

(30) Priorität: 11.12.2009 DE 102009057796; 12.01.2010 DE 102010004460
(43) Veröffentlichungstag der Anmeldung: 14.09.2011
(73) Patentinhaber: Noell Mobile Systems GmbH, 97080 Würzburg (DE)
(72) Erfinder: Müller, Conrad, Dipl.-Ing., 97299 Zell am Main (DE); Brummer, Thomas, 97080 Würzburg (DE)
(74) Vertreter: Hofmann, Matthias

(56) Entgegenhaltungen:
- US-A- 3 841 429
- US-B1- 6 224 018

## Beschreibung

Die Erfindung betrifft ein Fahrerrückhaltesystem für den Bediener eines Portalstaplers entsprechend dem Oberbegriff des ersten Patentanspruches. Ferner betrifft die Erfindung einen Portalstapler mit einem solchen Fahrerrückhaltesystem.

Die Erfindung ist überall dort anwendbar, wo an Portalstaplern Kabinen für den Bediener angeordnet sind.

Portalstapler sind üblicherweise von einer Person gesteuert und bauen sehr hoch und schmal. Das Tragwerk von Portalstaplern besteht im Wesentlichen aus einem schmalen, hohen Portal, ist auf gummibereiften, frei lenkbaren Rädern gelagert und trägt ein Hubwerk, so daß die zu transportierenden Container auch bei erheblicher Stapelhöhe überfahren werden können, wobei zwischen den Stützen des Portals das geführte Lastaufnahmemittel für die Container angeordnet ist, welches den Container anschlägt und nach dem Transport an geeigneter Stelle abschlägt. Die Bediener- oder Fahrerkabine ist so angeordnet, daß das Bedienpersonal den Hubvorgang gut steuern und überwachen kann, was zur Folge hat, daß die Kabine bis zu 12 m über dem Boden angeordnet ist. Um in die Kabine zu gelangen, sind unterschiedliche Möglichkeiten bekannt.

Zu den Möglichkeiten, die Kabine zu erreichen, gehören Leitern, Aufstiege an den Stützen oder Kabinen, die entlang der Stützen verfahrbar sind, wie das in DE 203 20 967 U1 beschrieben ist.

Portalstapler sind Fahrzeuge, die geeignet sind, mit oder ohne Last in hohem Tempo zu verfahren, zu beschleunigen und zu bremsen. Trotz elektrischer Bediener/Assistenz-Systeme sind die Maschinen kippgefährdet, wobei das Kippen zum einen aufgrund unangemessener Geschwindigkeit, Beschleunigung oder durch in Häfen nicht selten vorkommende Witterungsbedingungen bedingt ist.

Die Gefahr des Kippens kann mit Hilfe elektronischer Steuerungen eingeschränkt, jedoch nicht vermieden werden.

Kabinen von Portalstaplern weisen nicht nur die Eigenart auf, daß diese sehr hoch am Fahrzeug angeordnet sind, sondern auch, daß diese möglichst ein gutes Sichtfeld auf die darunter liegende Arbeitsfläche haben. Deshalb sind in der Regel in der Kabine von oben bis unten reichende Sichtfenster in alle Richtungen angeordnet. Bei Kippen des Fahrzeuges kommt dem Fahrerrückhaltesystem bei dieser Art von Kabinen eine besondere Bedeutung zu, denn dies setzt voraus, daß die Trägheitskräfte, welche auf den Fahrer während des Aufpralls wirken, über das Gurtsystem beziehungsweise im Falle des Aufpralls auf die Rückseite vom Fahrersitz direkt aufgenommen und über diesen in das Tragwerk der Kabine abgeleitet werden. Handelsübliche Sitze halten den Trägheitskräften, wie sie beim Aufprall aus großer Höhe entstehen, jedoch nicht immer Stand. Ein Fahrerrückhaltesystem für Portalstapler ist nicht bekannt.

Aus EP 1 245 487 A2 sind ein verbessertes Gurtrückhaltesystem und eine Aufrollvorrichtung für einen Sitz in einem Luftfahrzeug bekannt. Diese Vorrichtungen lassen es zu, daß sich der Angeschnallte aus seinem Sitz erheben und Aufgaben erledigen kann, die vom Sitz entfernt anfallen.

DE 20 2007 016 156 U1 beschreibt einen Portalstapier zum Transportieren und Stapeln von Frachtcontainern mit automatischer Lenkung, in dem ein Fahrerrückhaltesystem mit quer zu seiner Fahrtrichtung angeordnetem Fahrersitz, einer Rückenlehne, einem Sitzunterbau und einer Gurtrolle angeordnet ist.

Diese Anordnung ist zwar im Fahrzeug vorhanden, im Dokument selbst aber nicht beschrieben.

DE 36 31 881 C2 beschreibt eine Rückhaltevorrichtung für einen Fahrzeuginsassen, bei dem aufgrund eines anstellbaren Sitzkeiles der angegurtete Fahrzeuginsasse beim Aufprall des Kraftwagens nach einem kurzen Federweg des federnden Sitzpolsters abgefangen wird und sein Gesäß bei Erreichen einer vorbestimmten Belastung nicht weiter in das Sitzkissen eintaucht. Wird die Belastungsgrenze erreicht, so erfolgt unter Leistung von Formänderungsarbeit eine plastische Verformung des Sitzkeils bei geringfügig zunehmender Einsitztiefe. Als deformierbare Sitzkeile können Blechkonstruktionen, umschäumte Rohrkonstruktionen, Kunststoffschalen etc. verwendet werden. Das Sitzkissen ist in einem Sitzunterrahmen angeordnet, der die Sitzschale bildet und an dem eine Aufwickelrolle mit dem Zugelement, einem Seil und einem Hebelmechanismus angeordnet sind.

Der Sitzunterrahmen, der die Sitzschale darstellt, ist nicht verformbar, allerdings enthält er einen Mechanismus, mit dem das Sitzkissen verformbar ist.

DE 102 53 248 A1 beschreibt die Sicherheitsvorrichtung eines Kraftfahrzeuges mit einem Gurtsystem und einer Sitzvorrichtung, wobei das Gurtsystem mittels einer Anzahl von ersten Befestigungselementen an der Sitzvorrichtung befestigt ist und das Gurtsystem oder die Sitzvorrichtung mittels einer Anzahl von zweiten Befestigungselementen mit der Karosserie des Kraftfahrzeuges verbunden ist. Zum Bergen von Fahrzeuginsassen sind die zweiten Befestigungselemente trennbar, so daß verletzte Personen schonend aus der Fahrgastzelle geborgen werden können.

DE 196 16 915 C1 beschreibt eine Vorrichtung zur Gurtkraftbegrenzung eines Gurtrückhaltesystem in einem Fahrzeug, wobei wenigstens ein plastisch deformierbares Teil der Sitzstruktur im Kraftfluß zwischen dem Gurtanbindungspunkt am Sitz und der Fahrzeugkarosserie angeordnet ist und bei Überschreiten einer vorbestimmten Belastung das Teil plastisch verformt und die plastische Verformung auf einen vorbestimmten Wert begrenzt wird. Die genannten Teile befinden sich an der Sitzbefestigung unterhalb der Sitzvorrichtung.

Ein ähnliches Rückhaltesystem ist in DE 102 55 910 A1 beschrieben, wobei ein Rückhaltegurt mit einer Aufrollvorrichtung, z. B. einer Seilrolle, verbunden ist und die Aufrollvorrichtung wie die Gurtrolle herkömmlicher Sitzgurte funktioniert.

Die US 3,841,429 A beschreibt einen Portalstapler mit schwenkbaren Fahrersitz.

Aufgabe der Erfindung ist es daher, ein Fahrerrückhaltesystem zu entwickeln, welche im Falle eines Umkippens oder einer Kollision des Portalstaplers bei Aufprall der Kabine auf den Boden oder ein anderes Hindernis aus großer Höhe gewährleistet, daß die Wirkung des Aufpralls auf den Bediener deutlich gemindert wird.

Diese Aufgabe wird durch ein Fahrerrückhaltesystem nach den Merkmalen des ersten Patentanspruches sowie durch einen Portalstapler mit einem derartigem Fahrerrückhaltesystem gelöst.

Unteransprüche geben vorteilhafte Ausgestaltungen der Erfindung wieder.

Beschrieben wird ein Rückhaltesystem für Portalstapler, bei denen der Fahrer quer zur Fahrtrichtung sitzt. Es wird das Kippen nach kurveninnen und nach kurvenaußen betrachtet. Im ersten Fall fällt der Fahrer in die Gurte, im zweiten in den Sitz.

Das Rückhaltesystem besteht aus dem Fahrersitz mit Rücklehne und Unterbau, einem Gurtsystem und einem schalenartigen Körper aus einem geeigneten Werkstoff, zum Beispiel Stahl, welcher gegebenenfalls mit einer Führung verbunden ist, die eine Bewegung in Richtung der Trägheitskräfte gegen Widerstand zuläßt. Der schalenartige Körper wird im Folgenden als Sitzschale bezeichnet.

Der Fahrersitz steht mit seinem Unterbau in der Sitzschale und ist mit ihm fest verbunden. Der Fahrersitz ist gegenüber der Sitzschale zwecks Einstellens einer ergonomisch günstigen Arbeitsposition verschieb- und verstellbar. Die Gurtenden sind fest an der Sitzschale angeschlagen.

Die beim Aufprall der Kabine auf den Boden entstehenden großen Verzögerungen werden auf ein für den Menschen erträgliches Maß gemindert, indem
- Im Falle eines Aufpralls nach außen in Kauf genommen wird, daß der Fahrersitz den Belastungen nicht standhält und zerstört wird und der Fahrer zusammen mit der Rückenlehne, dem Sitz und gegebenenfalls dem Sitzunterbau in die Sitzschale fällt,
- im Falle eines Aufpralls nach innen die Gurtkräfte direkt in die Sitzschale geleitet werden,
welche sich unter der Wirkung der hierbei auftretenden Kräfte verformt, so daß hierbei Energie aufgenommen wird.

Grundsätzlich werden die Verzögerungen auf den Fahrer zunächst vom Gurtsystem und vom Fahrersitz, danach von der Sitzschale und im Weiteren vom Brems- und/oder Verzögerungssystem der Schienen aufgenommen, auf denen die Sitzschale in der Fahrerkabine angeordnet ist.

Die Sitzschale ist so ausgebildet, daß die größtmögliche Energiemenge aufgenommen werden kann. Dies muß durch individuelle Auslegung mittels bekannter FE-Analysemethoden bestimmt werden.

Kippt der Portalstapler nach außen, fällt der Fahrer in den Sitz. Hält dieser der Belastung nicht stand und fällt in die Sitzschale, verformt sich die Sitzschale und kann außerdem in den Schienen, gegen Widerstand verfahren.

Kippt der Portalstapler nach innen, fällt der Fahrer in die Gurte beziehungsweise den Gurt, welche(r) mit allen Enden an der Sitzschale befestigt ist (sowohl Gurtrolle als auch die beiden Enden des Beckengurtes). Diese verformt sich wiederum und kann in den Schienen gegen Widerstand verfahren.

Die Sitzschale kann mittels Schienensystems an der Kabine, beispielsweise am Boden der Kabine, befestigt sein. Das formschlüssige Schienensystem kann eine Nut-Feder-Verbindung in der Form darstellen, daß ein Schlitten auf einer sich im Querschnitt verengenden Schiene verfährt und durch plastische und/oder elastische Verformung der Schiene die Kraft aufgenommen wird, um den Schlitten zu bremsen. Das Verengen der Schienen kann erfolgen, indem der Abstand zwischen zwei Schienen in Richtung auf ihre Enden geringer wird, so daß diese bei Verfahren des Schlittens zueinander aufgebogen werden. Das Verengen kann aber auch in der Weise erfolgen, daß sich der Abstand zwischen Ober- und Unterseite jeder U-förmigen Schiene zu den Enden hin verringert.

Eine andere vorteilhafte Ausgestaltungsvariante kann darin bestehen, die Nut-Feder-Verbindung in Form eines Bremsbackensystems an der Schiene ein oder/und beidseitig anzuordnen.

Eine andere Möglichkeit besteht darin, die auf einem Schlitten angeordnete Sitzschale über eine gebremste Achse und einen sich abwickelnden Draht, der einen geeigneten Durchmesser aufweist, ein Seil oder ein äquivalentes Mittel zu bremsen.

Weiterhin kann ein Stauchrohr angeordnet sein, um das Verfahren der Sitzschale zu bremsen. Die Anordnung des Stauchrohres kann an geeigneter Stelle erfolgen, beispielsweise auf der einen, der anderen oder beiden Seiten am Schienensystem.

Denkbar ist auch eine Kombination dieser Maßnahmen mit anderen genannten Maßnahmen zum Abbremsen des Schlittens.

Im Folgenden wird die Erfindung an einem Ausführungsbeispiel und zwei Figuren dargestellt.

Die Figuren zeigen:
- Figur 1:: das Rückhaltesystem für Portalstapler mit Fahrersitz und Sitzschale auf einer Schiene.
- Figur 2:: das Fahrerrückhaltesystem für Portalstapler in Ansicht mit einer Welle und einem sich abwickelnden Draht.
- Figur 3:: das Fahrerrückhaltesystem für Portalstapler in Ansicht von unten mit einer Welle, einem sich abwickelnden Draht und einem Stauchrohr am Schienensystem.

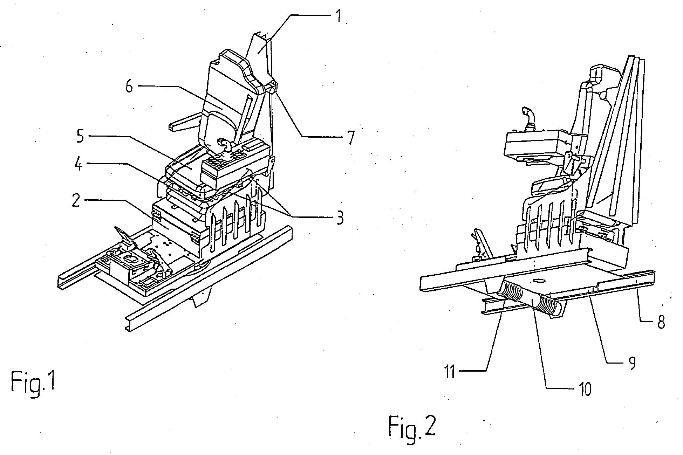

Die *Figur 1* zeigt den Fahrersitz 4 mit der Rückenlehne 6, dem Seil 3, und der Gurtrolle 7, welche an der Sitzschale 1 befestigt ist. Der Fahrersitz 4 ist mit der Sitzschale 1 über Seile 3 verbunden. Der Sitz 4 ist in seiner Höhe verstellbar und auf dem Unterbau 2 angeordnet. Der Sitz 4 mit Sitzschale 1 kann gegenüber der Fußpedale je nach Größe des Bedieners über Schienen verstellt werden. Die Sitzschale 1 ist auf einem Schlitten angeordnet, der in der Schiene 8 verfährt.

Im Fall eines Aufpralls in Blickrichtung des Fahrzeugführers (nach innen) wird der Fahrzeugführer zunächst durch den Gurt zurückgehalten. Da es sich im vorliegenden Fall um einen Drei-Punkt-Gurt handelt wird der Fahrer von einem Gurt zurückgehalten, der an drei Punkten befestigt ist. Weiterhin sind am Sitz 4 Seile 3 angeordnet. Diese fangen die mit ihnen verbundenen Sitzteile, falls sich diese nach dem Aufprall von ihrem Unterbau lösen. Bei Überschreiten einer bestimmten Kraft auf den Gurt wird die Sitzschale verformt und kann auf den Schienen 8 gegen einen Widerstand verfahren wodurch weitere Kräfte aufgenommen werden.

Beim Aufprall von hinten (Kippen nach außen) fällt der der Fahrer in den Fahrersitz 4. Hält dieser der Belastung nicht stand und fällt in die Sitzschale 1 wird diese durch die auftretenden Kräfte verformt. Die Sitzschale 1 kann dann mit dem Sitz 4 auf der Schiene 8 verfahren und wird auf dieser gebremst, wobei das Bremsen auf unterschiedliche Weise möglich ist.

Eine weitere bevorzugte Ausführung, um den Schlitten gegenüber der Schiene 8 zu bremsen, ist in *Figur* 2 gezeigt, wobei die Schiene 8 eine U-Form aufweist und eine gebremste Achse 10 mit einem sich abwickelnden Stahldraht 11 angeordnet ist.

Es ist erkennbar, daß ein Ende des Stahldrahtes 11 am Schlitten angeordnet ist, so daß dieser sich mit dem Sitz 4 und der Sitzschale 1 eine definierte Strecke in der Schiene 7 bewegen kann, bis seine Bewegung durch die Achse 10 zum Stillstand kommt. Zusätzlich sind im Schienensystem 8 Bremsen 9 beidseitig angeordnet, so daß ein zusätzliches Bremsen erfolgen kann.

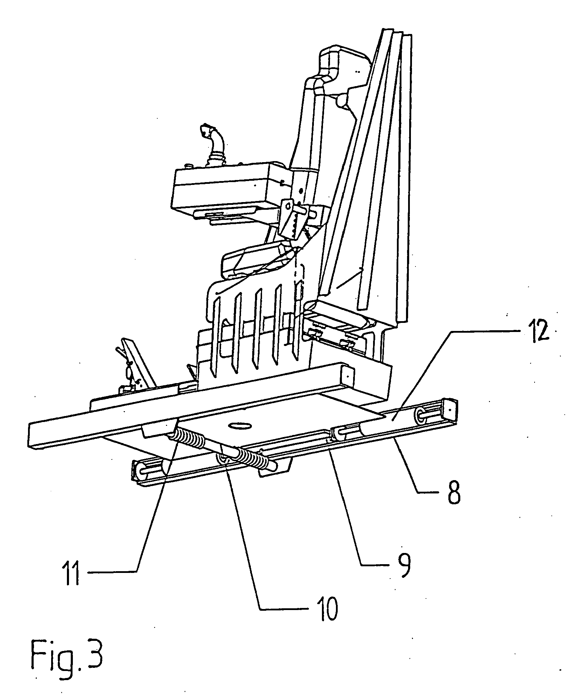

Die *Figur 3* zeigt das Fahrerrückhaltesystem in Ansicht von unten, bei dem eine Achse 10 mit einem sich abwickelnden Stahldraht 11 angeordnet ist und zwei Stauchrohre 12 im Schienensystem 8 zusätzlich als Bremssystem dienen.

Die Stauchrohre 12 weisen einen vorgegebenen Wanddurchmesser auf und werden bei Überschreiten einer vorbestimmten Kraft plastisch verformt.

## Patentansprüche

1. Fahrerrückhaltesystem für Portalstapler, wobei das Fahrerrückhaltesystem einen Fahrersitz (4) mit einer Rücklehne (6) und einen Unterbau (2) aufweist und wobei das Fahrerrückhaltesystem eine Sitzschale (1) und ein Gurtsystem aufweist, wobei der Fahrersitz mit seinem Unterbau fest verbunden ist und mit dem Unterbau in der Sitzschale (1) steht, wobei der Fahrersitz (4) quer zur Fahrtrichtung des Portalstaplers angeordnet ist, wobei die Sitzschale (1) durch, bei einem durch Umfallen entstehenden Aufprall auftretende, Kräfte, verformbar ist, wobei die Sitzschale (1) gegenüber der Fahrerkabine in Richtung auftretender Kräfte in ihrer Position verschieb- und abbremsbar ist, wobei eine Gurtrolle (7) in der Sitzschale (1) angeschlagen ist.

2. Fahrerrückhaltesystem nach Anspruch 1, **gekennzeichnet dadurch, daß** zwischen Fahrersitz (4) und Sitzschale (1) mindestens eine Feder, ein Gummiband oder ein Seil (3) angeordnet ist.

3. Fahrerrückhaltesystem nach den Ansprüchen 1 oder 2, **dadurch gekennzeichnet, daß** die Sitzschale (1) auf einem Schlitten an einem Schienensystems (8) gegenüber der Kabine angeordnet ist.

4. Fahrerrückhaltesystem nach Anspruch 3, **dadurch gekennzeichnet, daß** der Schlitten mittels Nut-Feder-Verbindung am Schienensystem (8) angeordnet ist.

5. Fahrerrückhaltesystem nach Anspruch 3 , **dadurch gekennzeichnet, daß** die Sitzschale (1) auf dem Schlitten mit einem Schienenbremsbackensystem (9) gegenüber einem U-förmigen Schienensystem (8) angeordnet ist.

6. Fahrerrückhaltesystem nach Anspruch 3, **dadurch gekennzeichnet, daß** die Sitzschale (1) auf dem Schlitten mittels einer Achse (10) und einem sich abwickelnden Draht (11) gebremst wird.

7. Fahrerrückhaltesystem nach Anspruch 3, **dadurch gekennzeichnet, daß** die Sitzschale (1) auf dem Schlitten mittels eines oder mehrerer Stauchrohre (12) gebremst wird.

8. Portalstapler mit einem Fahrerrückhaltesystem nach einem der Ansprüche 1 bis 7.

## Claims

1. A driver restraint system for straddle carriers, wherein the driver restraint system has a driver seat (4) with a back rest (6) and a lower structure (2) and wherein the driver restraint system has a seat shell (1) and a belt system, wherein the driver seat is firmly connected with its lower structure and with its lower structure stands in the seat shell (1), wherein the driver seat (4) is arranged transversely to the travelling direction of the straddle carrier, wherein the seat shell (1), by forces occurring by falling over, is deformable, wherein the seat shell (1) can be displaced and braked in its position in the direction of occurring forces in relation to the driver cabin, wherein a belt roll (7) is attached to the seat shell (1).

2. The driver restraint system according to claim 1, **characterized in that** at least a spring, a rubber band or a cord (3) is disposed between driver seat (4) and seat shell (1)

3. The driver restraint system according to claims 1 and 2, **characterized in that** the seat shell (1) is disposed on a slide on a rail system (8) in relation to the cabin.

4. The driver restraint system according to claim 3, **characterized in that** the slide is disposed on the rail system (8) by means of a groove-spring connection.

5. The driver restraint system according to claim 3, **characterized in that** the seat shell (1) with a rail brake shoe system (9) is disposed on the slide in relation to a U-shaped rail system (8).

6. The driver restraint system according to claim 3, **characterized in that** the seat shell (1) is braked on the slide by means of an axis (10) and an unwinding steel cable (11).

7. The driver restraint system according to claim 3, **characterized in that** the seat shell (1) is braked on the slide by means of one or several buckle tubes (12).

8. A straddle carrier with a driver restraint system according to one of clalims 1 to 7.

## Revendications

1. Système de retenue de conducteur pour des chariots élévateurs à portique, sachant que le système de retenue de conducteur présente un siège conducteur (4) pourvu d'un dossier (6) et d'une sous-structure (2) et sachant que le système de retenue de conducteur présente une coque de siège (1) et un système de ceinture, sachant que le siège conducteur est relié de manière solidaire à sa sous-structure et se trouve, avec la sous-structure, dans la coque de siège (1), sachant que le siège conducteur (4) est disposé de manière transversale par rapport au sens de marche du chariot élévateur à portique, sachant que la coque de siège (1) peut être déformée par des forces apparaissant lors d'un choc résultant d'un renversement, sachant que la coque de siège (1) peut être déplacée par coulissement et peut être ralentie dans sa position par rapport à la cabine de conducteur en direction des forces apparaissant, sachant qu'un enrouleur de ceinture (7) est attaché dans la coque de siège (1).

2. Système de retenue de conducteur selon la revendication 1, **caractérisé en ce qu'**au moins un ressort, une bande de caoutchouc ou un câble (3) sont disposés entre le siège conducteur (4) et la coque de siège (1).

3. Système de retenue de conducteur selon les revendications 1 ou 2, **caractérisé en ce que** la coque de siège (1) est disposée sur un chariot au niveau d'un système de rail (8) par rapport à la cabine.

4. Système de retenue de conducteur selon la revendication 3, **caractérisé en ce que** le chariot est disposé au niveau du système de rail (8) au moyen d'un système d'assemblage languette-rainure.

5. Système de retenue de conducteur selon la revendication 3, **caractérisé en ce que** la coque de siège (1) est disposée sur le chariot pourvu d'un système de patin de freinage de rail (9) par rapport à un système de rail (8) présentant une forme de U.

6. Système de retenue de conducteur selon la revendication 3, **caractérisé en ce que** la coque de siège (1) sur le chariot est freinée au moyen d'un essieu (10) et d'un fil métallique (11) se déroulant.

7. Système de retenue de conducteur selon la revendication 3, **caractérisé en ce que** la coque de siège (1) sur le chariot est freinée au moyen d'un ou de plusieurs tubes d'écrasement (12).

8. Chariot élévateur à portique comprenant un système de retenue de conducteur selon l'une quelconque des revendications 1 à 7.
